(19) Europäisches Patentamt

European Patent Office

Office européen des brevets

(11) **EP 2 573 840 A1**

(12) **EUROPEAN PATENT APPLICATION**
published in accordance with Art. 153(4) EPC

(43) Date of publication:
27.03.2013 Bulletin 2013/13

(51) Int Cl.:
*H01M 4/04* (2006.01)   *B05C 5/02* (2006.01)
*B05C 11/10* (2006.01)   *H01M 4/139* (2010.01)

(21) Application number: 11783490.3

(22) Date of filing: 16.05.2011

(86) International application number:
**PCT/JP2011/061185**

(87) International publication number:
**WO 2011/145556 (24.11.2011 Gazette 2011/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 18.05.2010  JP 2010114297

(71) Applicant: **Nissan Motor Co., Ltd
Yokohama-shi, Kanagawa 221-0023 (JP)**

(72) Inventors:
• **WAKAMATSU, Hironori
Atsugi-shi
KanaGAWA 243-0123 (JP)**
• **NATSUME, Tomoyuki
ATSUGI-SHI
KANAGAWA 243-0123 (JP)**

(74) Representative: **Grünecker, Kinkeldey,
Stockmair & Schwanhäusser
Leopoldstrasse 4
80802 München (DE)**

(54) **COATING APPARATUS**

(57) The present invention concerns a coating apparatus including a coating unit for applying a slurry-like kneaded electrode material prepared by kneading an electrode material and a solvent, a pump for feeding the kneaded electrode material under pressure to the coating unit, and a temperature raising unit for raising the temperature of the kneaded electrode material before coating to a predetermined temperature range where a storage modulus of the kneaded electrode material becomes substantially constant. This enables stable coating in an early stage after the start of coating.

FIG.2

## Description

### Technical Field

This invention relates to a coating apparatus.

### Background Art

JP2007-66744A discloses a coating apparatus which suppresses a variation of a coating amount and performs stable coating by adjusting a pressure in applying a coating material.

### Summary of Invention

However, in the conventional coating apparatus described above, in the case of applying a slurry-like kneaded electrode material prepared by kneading an electrode material and a solvent, the kneaded electrode material has received heat from coating apparatus components such as a pump. This causes unstable properties due to a temperature variation of the kneaded electrode material until a specified time elapses after the start of coating, whereby the coating amount varies and stable coating cannot be performed. Thus, there has been a problem of requiring time until the coating amount becomes constant from the start of coating.

The present invention was developed in view of such a problem and an object thereof is to shorten a time required until a coating amount becomes constant after the start of coating.

To achieve the above object, the present invention includes a coating unit for applying a slurry-like kneaded electrode material prepared by kneading an electrode material and a solvent, a pump for feeding the kneaded electrode material under pressure to the coating unit, and a temperature raising unit for raising the temperature of the electrode material before coating to a predetermined temperature range where a storage modulus of the kneaded electrode material becomes substantially constant.

An embodiment and advantages of the present invention are described in detail below with reference to the accompanying drawings.

### Brief Description of Drawings

FIGS. 1 are schematic views of a lithium-ion secondary battery,
FIG. 2 is a schematic configuration diagram of an electrode manufacturing apparatus,
FIG 3 is a graph plotting storage moduli of a kneaded positive electrode material and a kneaded negative electrode material at each temperature shown in TABLE-1.

### Embodiment of Invention

Hereinafter, an embodiment of the present invention is described with reference to the drawings and the like.

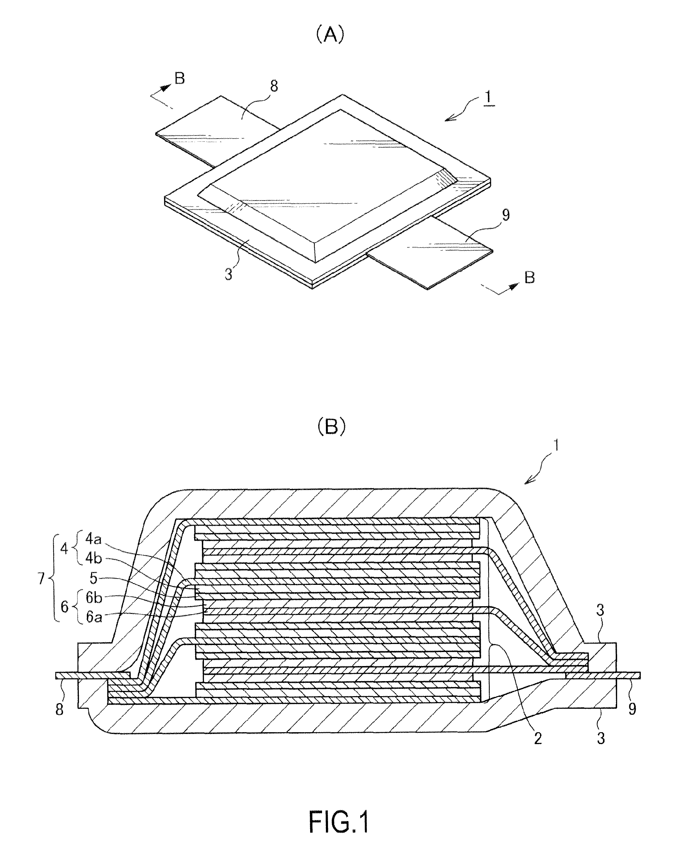

FIGS. 1 are schematic views of a lithium-ion secondary battery 1. FIG. 1(A) is a perspective view of the lithium-ion secondary battery 1 and FIG. 1(B) is a sectional view along B-B of FIG. 1(A).

As shown in FIGS. 1(A) and 1(B), the lithium-ion secondary battery 1 includes a storage element 2 and an exterior case 3 for housing the storage element 2.

The storage element 2 is formed as a laminated body in which positive electrodes 4, separators 5 as electrolyte layers and negative electrodes 6 are successively laminated. The positive electrode 4 includes positive electrode layers 4b on opposite surfaces of a plate-like positive electrode current collector 4a, and the negative electrode 6 includes negative electrode layers 6b on opposite surfaces of a plate-like negative electrode current collector 6a. Note that, for the positive electrode 4 arranged in the outermost layer of the storage element 2, the positive electrode layer 4b is formed only on one surface of the positive electrode current collector 4a.

The adjacent positive electrode 4, separator 5 and negative electrode 6 form one unit cell 7, and the lithium-ion battery 1 is formed by electrically connecting a plurality of laminated unit cells 7 in parallel.

The exterior case 3 is made of a polymer-metal complex laminated film sheet material in which a metal such as aluminum is covered with an insulator such as a polypropylene film. Outer peripheral parts of the exterior case 3 are joined by thermal fusion with the storage element 2 housed in the exterior case 3. This exterior case 3 is provided with a positive electrode tab 8 and a negative electrode tab 9 as external terminals to take out power from the storage element 2 to the outside.

One end of the positive electrode tab 8 is located outside the exterior case 3 and the other end of the positive electrode tab 8 is connected to an aggregate of each positive electrode current collector 4a inside the exterior case 3. One end of the negative electrode tab 9 is located outside the exterior case 3 and the other end of the negative electrode tab 9 is connected to an aggregate of each negative electrode current collector 6a inside the exterior case 3.

Next, a general manufacturing method for an electrode (positive electrode 4 or negative electrode 6) is briefly described.

Generally, an electrode is manufactured by way of a coating process of applying a slurry-like kneaded electrode material prepared by kneading an electrode material and a solvent to a current collector (positive electrode current collector 4a or negative electrode current collector 6a) and then a drying process of volatizing the solvent of the kneaded electrode material to form an electrode layer (positive-electrode layer 4b or negative electrode layer 6b) which is 100 % of solid content.

Here, to improve production efficiency of the lithium-ion secondary battery 1, it is effective to shorten a time required for each process described above. Accordingly, in this embodiment, a time required for the coating process is shortened by suppressing a temperature variation of the kneaded electrode material in the coating process and making a coating amount stable in an early stage. An electrode manufacturing apparatus 100 according to this embodiment is described below.

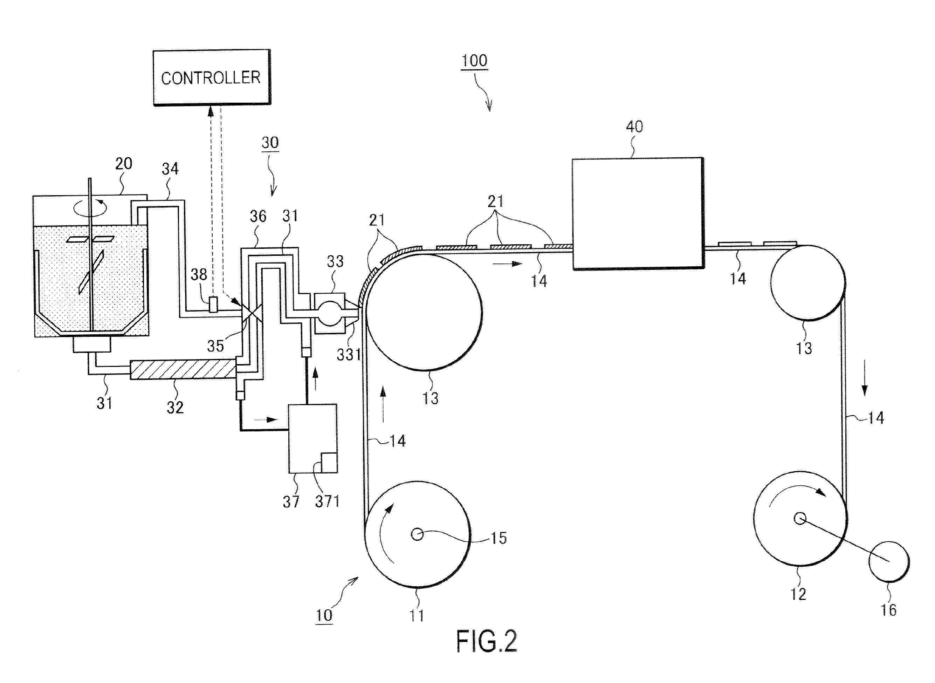

FIG. 2 is a schematic configuration diagram of the electrode manufacturing apparatus 100 according to this embodiment used at the time of manufacturing the electrodes of the lithium-ion secondary battery 1.

The electrode manufacturing apparatus 100 includes a conveying apparatus 10, a kneading apparatus 20, a coating apparatus 30, a drying apparatus 40 and a controller 50.

The electrode manufacturing apparatus 100 is an apparatus for manufacturing an electrode by applying a kneaded electrode material 21 kneaded by the kneading apparatus 20 to a surface of a metal foil 14 conveyed by the conveying apparatus 10 by the coating apparatus 30 and drying the kneaded electrode material 21 by the drying apparatus 40. If necessary, the electrode may be pressed by a press apparatus after drying to adjust the thickness and the like.

Each apparatus constituting the electrode manufacturing apparatus 100 is described in detail below.

The conveying apparatus 10 includes an unwind roll 11, a take-up roll 12, and support rolls 13. The conveying apparatus 10 conveys a metal foil (having a thickness of 10 [$\mu$m] to 40 [$\mu$m]) 14 in the form of a thin film, which becomes the positive electrode current collector 4a or the negative electrode current collector 6a, from the unwind roll 11 to the take-up roll 12 by a roll-to-roll method.

In this embodiment, an aluminum foil is used as the metal foil 14 that becomes the positive electrode current collector 4a in the case of manufacturing the positive electrode 4 and a copper foil is used as the metal foil 14 that becomes the negative electrode current collector 6a in the case of manufacturing the negative electrode 6. However, there is no limitation to this.

The metal foil 14 is wound on the unwind roll 11. The unwind roll 11 includes a braking mechanism 15, and the rotation of the unwind roll 11 is appropriately restricted by this braking mechanism 15 to apply a predetermined tension to the metal foil 14.

The take-up roll 12 is driven and rotated by a drive motor 16 and takes up the metal foil 14 pulled from the unwind roll 11.

A plurality of support rolls 13 are provided in a metal foil conveyance path between the unwind roll 11 and the take-up roll 12 and hold the lower surface of the metal foil 14 being conveyed.

The kneading apparatus 20 is a twin screw kneader and produces the slurry-like kneaded electrode material 21 by uniformly dispersing the electrode material in the solvent. The kneading apparatus 20 is not limited to the twin screw kneader and, for example, a planetary mixer or kneader may be used.

The kneaded electrode material 21 includes a kneaded positive electrode material produced in the case of manufacturing the positive electrode 4 and a kneaded negative electrode material produced in the case of manufacturing the negative electrode 6.

In the case of manufacturing the kneaded positive electrode material, a positive electrode active material as the electrode material, a conductive assistant and a binder are poured into the kneading apparatus 20 and these are uniformly dispersed in the solvent. In the case of manufacturing the kneaded negative electrode material, a negative electrode active material as the electrode material, a conductive assistant and a binder are poured into the kneading apparatus 20 and these are uniformly dispersed in the solvent.

The positive electrode active material is a material which stores and releases lithium ions of lithium metal oxides and the like. In this embodiment, lithium manganate is used as the positive electrode active material.

The negative electrode active material is a material which stores and release lithium ions of hard carbons, graphites and the like. In this embodiment, hard carbon is used as the negative electrode active material.

The conductive assistant is a substance for improving conductivity of a carbon material (carbon powder, carbon fibers) and the like. Various carbon blacks such as acetylene black, furnace black and Ketjen Black and graphite powder can be used as the carbon powder. In this embodiment, carbon black is used as the conductive assistant both in the case of producing the kneaded positive electrode material and in the case of producing the kneaded negative electrode material.

The binder is a substance for binding active material fine particles to each other. In this embodiment, polyvinylidene fluoride (PVDF) is used as the binder both in the case of producing the kneaded positive electrode material and in the case of producing the kneaded negative electrode material, but there is no limitation to this.

The solvent is a liquid for dissolving the electrode material. In this embodiment, N-methylpyrrolidone (NMP) is used as the solvent both in the case of producing the kneaded positive electrode material and in the case of producing the kneaded negative electrode material, but there is no limitation to this.

The coating apparatus 30 is an apparatus for applying the kneaded electrode material 21 produced in the kneading apparatus 20 to the surface of the metal foil 14 and includes a supply pipe 31, a supply pump 32, a slit die 33, a recovery pipe 34, a recovery valve 35, a hot water circulating pipe 36, a hot water tank 37 and a thermocouple 38.

The supply pipe 31 is a pipe having one end connected to a lower side of the kneading apparatus 20 and the other end connected to the slit die 33.

The supply pump 32 is provided in the supply pipe 31 and feeds the kneaded electrode material 21 produced in the kneading apparatus 20 to the slit ide 33 via the supply pipe 31.

The slit die 33 extrudes the kneaded electrode material 21 fed from the supply pump 32 from a slit 331 formed at a leading end part and applies it to the surface of the metal foil 14 being conveyed. The slit die 33 extrudes and applies the kneaded electrode material 21 at specified intervals in a conveying direction of the metal foil 14 and at a right angle to the conveying direction.

The recovery pipe 34 is a pipe having one end connected to the supply pipe 31 between the supply pump 32 and the slit die 33 and the other end connected to an upper side of the kneading apparatus 20.

The recovery valve 35 is provided at a junction between the supply pipe 31 and the recovery pipe 34. If the recovery valve 35 is open, the kneaded electrode material 21 fed under pressure from the supply pump 32 is returned to the kneading apparatus 20 via the recovery pipe 34. On the other hand, if the recovery valve 35 is closed, the kneaded electrode material 21 fed under pressure from the supply pump 32 is supplied to the slit die 33 via the supply pipe 31.

The hot water circulating pipe 36 is a pipe formed to cover the outer periphery of the supply pipe 31 from the supply pump 32 to the slit die 33, and both ends thereof are connected to the hot water tank 37 to circulate hot water. As just described, a double pipe structure is adopted from the supply pump 32 to the slit die 33, and the temperature of the kneaded electrode material 21 flowing in the supply pipe 31 from the supply pump 32 to the slit die 33 is maintained at a predetermined temperature, at which a degree of elasticity (hereinafter, referred to as a "storage modulus (G')") of the kneaded electrode material 21 becomes stable, by the hot water circulating in the hot water circulating pipe 36.

The hot water tank 37 stores water that circulates in the hot water circulating pipe 36. The hot water tank 37 includes a temperature raiser 371. The temperature raiser 371 raises the temperature of the stored water to a set temperature to obtain hot water.

The thermocouple 38 detects the temperature of the kneaded electrode material 21 flowing in the recovery pipe 34.

The drying apparatus 40 is, for example, a hot-air drying furnace and provided in the metal foil conveyance path. The drying apparatus 40 blows hot air to the kneaded electrode material 21 while maintaining a temperature in the apparatus at a predetermined temperature, thereby volatizing the solvent in the kneaded electrode material 21 to form an electrode layer which is 100 % of solid content.

The controller 50 is configured by a microcomputer including a central processing unit (CPU), a read only memory (ROM), a random access memory (RAM) and an input/output interface (I/O interface). The temperature of the kneaded electrode material 21 detected by the thermocouple 38 is input to the controller 50. The controller 50 opens and closes the recovery valve 35 based on the input temperature of the kneaded electrode material 21. Specifically, the recovery valve 35 is open until the temperature of the kneaded electrode material 21 reaches the predetermined temperature at which the storage modulus of the kneaded electrode material 21 becomes stable, and is closed when the predetermined temperature is reached.

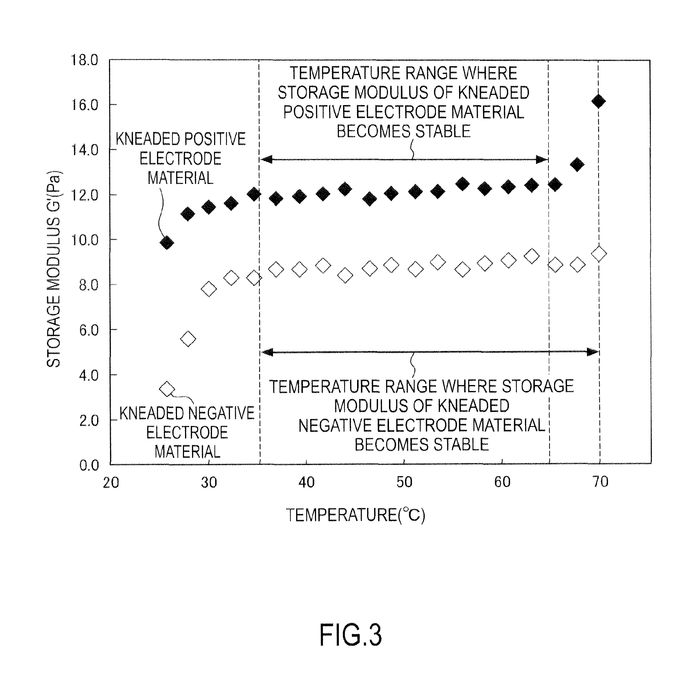

Here, the reason why the temperature of the kneaded electrode material 21 flowing in the supply pipe 31 from the supply pump 32 to the slit die 33 is maintained at the predetermined temperature, at which the storage modulus of the kneaded electrode material 21 becomes stable, by the hot water circulating in the hot water circulating pipe 36 is described with reference to TABLE-1 and FIG. 3.

In this embodiment, that "the storage modulus of the kneaded electrode material 21 becomes stable" means that a change rate of the storage modulus of the kneaded electrode material 21 when the temperature is raised by 1 [°C] is within 5 %. The change rate of the storage modulus is defined by the following equation.

[Equation 1]

$$\text{Change rate} = (\text{storage modulus after temperature change} - \text{storage modulus before temperature change})/\text{storage modulus before temperature change}$$

TABLE-1 is a table showing the storage moduli of the kneaded positive electrode material and the kneaded negative electrode material at each temperature when the temperature is raised by about 2 [°C] and the change rates of the storage moduli of the kneaded positive electrode material and the kneaded negative electrode material at that time.

[TABLE-1]

| Temperature (°C) | Storage Modulus G' (Pa) | | Change Rate (%) | |
|---|---|---|---|---|
| | Positive Electrode | Negative Electrode | Positive Electrode | Negative Electrode |
| 25.6 | 9.8 | 3.3 | | |
| 27.7 | 11.1 | 5.6 | 13% | 68% |
| 29.9 | 11.5 | 7.8 | 3% | 39% |
| 32.2 | 11.6 | 8.3 | 1% | 6% |
| 34.5 | 12.1 | 8.3 | 4% | 0% |
| 36.8 | 11.9 | 8.7 | -2% | 5% |
| 39.2 | 12.0 | 8.7 | 1% | 0% |
| 41.6 | 12.1 | 8.9 | 1% | 2% |
| 43.9 | 12.3 | 8.5 | 2% | -5% |
| 46.3 | 11.9 | 8.8 | -4% | 4% |
| 48.6 | 12.1 | 8.9 | 2% | 2% |
| 51.0 | 12.2 | 8.8 | 1% | -2% |
| 53.3 | 12.2 | 9.0 | 0% | 3% |
| 55.8 | 12.5 | 8.7 | 3% | -4% |
| 58.1 | 12.4 | 9.0 | -2% | 3% |
| 60.5 | 12.4 | 9.1 | 1% | 2% |
| 62.9 | 12.5 | 9.3 | 1% | 2% |
| 65.2 | 12.6 | 8.9 | 0% | -4% |
| 67.5 | 13.4 | 9.0 | 7% | 0% |
| 69.7 | 16.3 | 9.4 | 21% | 5% |

FIG. 3 is a graph plotting the storage moduli of the kneaded positive electrode material and the kneaded negative electrode material at each temperature shown in TABLE-1.

As shown in TABLE-1 and FIG. 3, the storage modulus of the kneaded electrode material 21 at each temperature indicates different values between the kneaded positive electrode material and the kneaded negative electrode material, the change rate of the storage modulus largely varies and the storage modulus becomes unstable in a temperature range in the range between 20 to 29 [°C] normally set as a room temperature for both the kneaded positive electrode material and the kneaded negative electrode material.

The kneaded electrode material 21 (kneaded positive electrode material and kneaded negative electrode material) is stable in a state where the active material, the conductive assistant and the binder are uniformly dispersed. At this time, in the vicinity of the room temperature, the kneaded electrode material 21 is stable in a state where binder molecules are adhering to the surfaces of active material fine particles and conductive assistant fine particles (colloidal state). However, if the temperature is raised from the vicinity of the room temperature, the binder molecules desorb from the surfaces of the active material fine particles and the conductive assistant fine particles as the temperature increases, whereby interaction, i.e. repulsive forces between the active material fine particles and the conductive assistant fine particles increase. This is thought to increase the storage modulus of the kneaded electrode material 21.

In the case of the kneaded positive electrode material, the storage modulus takes a substantially constant value and the storage modulus becomes stable in a temperature range from about 35 [°C] to 65 [°C]. If 65 [°C] is exceeded, the storage modulus increases again, the change rate becomes larger and the storage modulus becomes unstable. This is thought to be because, in the case of the kneaded positive electrode material, cross-linking reaction of the binder molecules progresses and the gelling of the kneaded positive electrode material is promoted if 65 [°C] is exceeded.

On the other hand, in the case of the kneaded negative electrode material, the storage modulus takes a substantially constant value and the storage modulus becomes stable in a temperature range from about 35 [°C] to 70 [°C].

As just described, the storage modulus is thought to indicate repulsive forces resulting from steric hindrance between the active material fine particles and the conductive assistant fine particles in the kneaded electrode material 21. If the storage modulus of the kneaded electrode material 21 increases while the kneaded electrode material 21 is applied to the current collector, a feed amount changes and a coating amount is no longer stable even if the kneaded electrode material 21 is extruded at a constant pressure.

Accordingly, in the case of applying the kneaded electrode material 21 in the vicinity of the room temperature, the storage modulus largely varies even when the temperature of the kneaded electrode material 21 is raised by about several degrees Celsius by the supply pump 32 and the like. Thus, a fine adjustment is necessary to make the coating amount stable after the start of application of the kneaded electrode material 21 and time is required until stable coating can be performed.

Accordingly, in this embodiment, the kneaded electrode material 21 is applied to the current collector while the temperature of the kneaded electrode material 21 is maintained at the predetermined temperature at which the storage modulus of the kneaded electrode material 21 becomes stable (35 [°C] to 65 [°C] in the case of the kneaded positive electrode material, 35 [°C] to 70 [°C] in the case of the kneaded negative electrode material). Note that the upper limit of the predetermined temperature is set at 70 [°C] in the case of applying the kneaded negative electrode material to the current collector because the kneaded negative electrode material is more likely to be dried and solidified at a discharge opening of the slit die 33 and it becomes difficult to apply the kneaded negative electrode material to have uniform thickness and the like if an upper limit higher than this is set.

Next, functions of the electrode manufacturing apparatus according to this embodiment are described.

The kneaded electrode material 21 kneaded in the kneading apparatus 20 is first fed under pressure by the supply pump 32 with the recovery valve 35 opened. This causes the kneaded electrode material 21 to be filled in the supply pipe 31 from the supply pump 32 to the recovery valve 35.

Subsequently, after the temperature of the water in the hot water tank is raised to a temperature at which the temperature of the kneaded electrode material 21 can be raised to the predetermined temperature at which the storage modulus becomes stable, thereby obtaining hot water, this hot water is flowed and circulated in the hot water recovery pipe 36. In this way, the temperature of the kneaded electrode material 21 filled in the supply pipe 31 from the supply pump 32 to the recovery valve 35 is adjusted to the predetermined temperature at which the storage modulus of the kneaded electrode material 21 becomes stable.

Then, the temperature of the kneaded electrode material 21 is detected by the thermocouple 38 provided in the recovery pipe 34. After the temperature of the kneaded electrode material 21 reaches the predetermined temperature at which the storage modulus of the kneaded electrode material 21 becomes stable, the recovery valve 35 is closed, the kneaded electrode material 21 is supplied to the slit die 33, and the kneaded electrode material 21 is extruded through the slit die 33 to be applied to the metal foil 14.

In this way, according to this embodiment described above, the kneaded electrode material 21 is not affected by a temperature change due to heat received from the coating apparatus components such as the supply pump 32 since the kneaded electrode material 21 is applied to the metal foil 14 after the temperature of the kneaded electrode material 21 is adjusted to the predetermined temperature at which the storage modulus of the kneaded electrode material 21 becomes stable. Thus, a property variation of the kneaded electrode material 21 due to a temperature change can be reduced and stable coating can be performed from the start of application of the kneaded electrode material 21. As a result, fine adjustments and the like to make the coating amount stable after the start of coating become unnecessary, wherefore an adjustment time for that can be shortened. Since this can shorten a time required for the coating process, production efficiency of the lithium-ion secondary battery can be improved.

Further, since the temperature of the kneaded electrode material 21 to be applied is increased to the predetermined temperature higher than the room temperature in advance, the length of the drying furnace can be shortened and a drying time can also be shortened in the drying process after the coating process. Thus, production efficiency of the lithium-ion secondary battery 1 can be further improved. To effectively achieve such an effect, the predetermined temperature is desirably set within the range of 60 [°C]±5 [°C].

Although this invention has been described by way of the specific embodiment, this invention is not limited to the above embodiment. It is possible for a person skilled in the art to modify or alter the above embodiment in various manners within the technical scope of the present invention.

For example, without being limited to the kneaded electrode material 21 illustrated in the above embodiment, any slurry-like kneaded material having viscoelasticity can be stably applied using the coating apparatus according to this embodiment. A water-based material using water as a solvent and a mixture of styrene butadiene rubber (SBR) and methylcellulose acetate (CMC), which is a thickener, as a binder can be cited as the slurry-like kneaded material having viscoelasticity.

Further, although the temperature of the kneaded electrode material 21 is kept at the predetermined temperature by circulating the hot water in the above embodiment, the temperature of the kneaded electrode material 21 may be kept at the predetermined temperature by including a heating element such as a ribbon heater in the supply pipe 31. However, the method for circulating the hot water as in the above embodiment is more preferable in view of safety and facility maintainability.

For the above description, the contents of Japanese Patent Application No. 2010-114297 filed on May 18, 2010 are hereby incorporated by reference.

**Claims**

1. A coating apparatus, comprising:

   a coating unit for applying a slurry-like kneaded electrode material prepared by kneading an electrode material and a solvent;
   a pump for feeding the kneaded electrode material under pressure to the coating unit; and
   a temperature raising unit for raising the temperature of the kneaded electrode material before coating to a predetermined temperature range where a storage modulus of the kneaded electrode material becomes substantially constant.

2. The coating apparatus according to claim 1, further comprising a pipe for connecting the coating unit and the pump, wherein the temperature raising unit raises the temperature of the kneaded electrode material flowing in the pipe to the predetermined temperature range.

3. The coating apparatus according to claim 2, wherein the temperature raising unit is a pipe which is formed to cover the outer periphery of the pipe and in which hot water circulates.

4. The coating apparatus according to any one of claims 1 to 3, wherein the predetermined temperature range is a temperature range where a change rate of the storage modulus of the kneaded electrode material is within 5 % when the temperature of the kneaded electrode material is raised by 1°C.

5. The coating apparatus according to any one of claims 1 to 3, wherein the predetermined temperature range is a range from 35°C to 65°C when the kneaded electrode material is a kneaded positive electrode material.

6. The coating apparatus according to any one of claims 1 to 3, wherein the predetermined temperature range is a range from 35°C to 70°C when the kneaded electrode material is a kneaded negative electrode material.

(A)

(B)

FIG.1

CONTROLLER

100

30

40

FIG.2

FIG.3

**INTERNATIONAL SEARCH REPORT**

International application No.

PCT/JP2011/061185

A. CLASSIFICATION OF SUBJECT MATTER
*H01M4/04*(2006.01)i, *B05C5/02*(2006.01)i, *B05C11/10*(2006.01)i, *H01M4/139*
(2010.01)n

According to International Patent Classification (IPC) or to both national classification and IPC

B. FIELDS SEARCHED

Minimum documentation searched (classification system followed by classification symbols)
H01M4/04, H01M4/139

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-296255 A (Toshiba Corp.),<br>21 October 2004 (21.10.2004),<br>claims 1, 2; paragraphs [0015] to [0018],<br>[0024]; fig. 1<br>(Family: none) | 1,2,4-6<br>3 |
| X<br>Y | JP 2004-199916 A (Matsushita Electric<br>Industrial Co., Ltd.),<br>15 July 2004 (15.07.2004),<br>claims 1, 7; paragraphs [0011], [0021] to<br>[0037]; fig. 1<br>(Family: none) | 1,4-6<br>3 |
| P,A | JP 2010-182485 A (Toyota Motor Corp.),<br>19 August 2010 (19.08.2010),<br>entire text<br>& WO 2010/089650 A1 | 1-6 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 August, 2011 (15.08.11) | 23 August, 2011 (23.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007066744 A

- JP 2010114297 A